# NEUE EUROPÄISCHE PATENTSCHRIFT

(11) **EP 2 192 386 B2**
(45) Veröffentlichungstag und Bekanntmachung des Hinweises auf die Entscheidung über den Einspruch: **04.12.2013**
(45) Hinweis auf die Patenterteilung: 09.03.2011
(21) Anmeldenummer: 08170102.1
(22) Anmeldetag: 27.11.2008
(51) Int. Cl.: G01D 4/00

(54) **Zähl- und Messpunkt-System zur Messung und Zählung von elektrischer Energie und Verfahren**
Counting and measuring point system for measuring and counting electric energy and method
Système de point de calcul et de mesure et calcul d'énergie électrique ainsi que procédé

(43) Veröffentlichungstag der Anmeldung: 02.06.2010
(73) Patentinhaber: ubitricity Gesellschaft für verteilte Energiesysteme mbH, 10587 Berlin (DE)
(72) Erfinder: Hechtfischer, Knut, 14199, Berlin (DE); Pawlitschek, Frank, 10437 Berlin (DE)
(74) Vertreter: Vossius & Partner

(56) Entgegenhaltungen:
- EP-B- 0 769 218
- US-A- 5 742 229
- US-A1- 2006 259 447
- US-A1- 2007 282 495
- US-A1- 2008 040 223
- US-B2- 6 930 410

## Beschreibung

Die Erfindung betrifft ein Zähl- und Messpunkt-System zur Messung und Zählung der von einer Verbrauchs- und/oder Erzeugungseinheit an einem festen geographischen Punkt aus einer Anschlussvorrichtung entnommenen oder in diese eingespeisten elektrischen Energie gemäß Anspruch 1.

Die Erfindung betrifft ebenfalls ein Verfahren zum ortsungebundenen Messen, Zählen und Abrechnen von elektrischem Strom.

### Hintergrund der Erfindung

Derzeit erfolgt die Versorgung mit elektrischer Energie ganz überwiegend über Netzanschlüsse, die einem Grundstück fest zugeordnet sind. Diese Netzanschlüsse sind einem Anschlussnehmer fest zugewiesen. Zum Zweck der Messung, Zählung und Abrechnung der über den Netzanschluss entnommenen elektrischen Energie sind darüber hinaus ortsgebundene Stromzähler fest installiert. Die gesamte über den Netzanschluss entnommene elektrische Energie wird so mit dem Anschlussnehmer abgerechnet. Eine Differenzierung danach, welche Person oder welcher Verbraucher an dem gemessenen Anschluss jeweils Energie entnommen hat, ist nicht vorgesehen.

Die DE 695 09 529 (EP 0 769 218) beschreibt ein Verteilnetzwerk. Sie bietet eine Lösung dafür an, dass die Abrechnung teilnehmerbasiert erfolgen kann und nicht an einen festen geographischen Punkt gebunden ist wie dies etwa die SE 425 123, die US 4 352 992 oder die EP 0 047 089 vorsehen.

Die DE 695 09 529 beschreibt ein Verteilnetzwerk bestehend aus (a) elektrischen Leitungen, (b) einer Vielzahl von Abgriffsvorrichtungen mit zumindest einer Steckdoseneinrichtung zum Abgreifen elektrischen Stroms und (c) einer Computereinheit, die mit einzelnen oder mehreren Abgriffsvorrichtungen über das Stromnetz kommuniziert. Soweit die Abgriffsvorrichtungen schaltbar sind, sind diese Abgriffsvorrichtungen zudem stromnetzseitig mit einer sog. Regelungs- und einer Steuereinrichtung ausgestattet, die der Identifizierung einer Bedienperson und der Schaltung der Steckdoseneinrichtung dienen.

Die Bedienperson, die eine Energieverbrauchseinheit mit der Abgriffsvorrichtung verbindet, wird von der mit der Abgriffsvorrichtung verbundenen Computereinheit oder der Regetungseinrichtung über einen in der Energieverbrauchseinheit eingebauten Mikroprozessor identifiziert. In dem beschriebenen System identifiziert somit die Abgriffseinrichtung bzw. die damit verbundene Computereinheit die Bedienperson oder die Verbrauchseinheit. Dies ist nur dadurch möglich, dass in dem von der DE 695 09 529 beschriebenen Verteilnetzwerk die Abgriffsvorrichtungen mit eigens hierfür installierten Computereinheiten verbunden werden, da dort erfindungsgemäß die Abgriffsvorrichtungen (in Verbindung mit den jeweils dafür installierten Computereinheiten) die Fähigkeit aufweisen müssen, neben den Informationen über die Abgriffsvorrichtung selbst alle Informationen über sämtliche Systemteilnehmer vorzuhalten oder abzurufen zu können. Der Identifikationsprozess, der der Bedienperson durch Schaltung der Steuereinrichtung die Entnahme von Strom gestattet, findet nach DE 695 09 529 durch eine Kommunikation zwischen einer eigens für eine oder eine kleinere Zahl von Abgriffseinrichtungen installierten Computereinheit und der Abgriffsvorrichtung statt und zwar über Signale, die dem Verteilnetzwerk überlagert werden. Das erfindungsgemäße Verteilungsnetzwerk nutzt die Power-Line-Kommunikation zwischen der Computereinheit und der Abgriffsvorrichtung.

Jeder Identifizierungs- und damit auch Steuerungsvorgang in dem von DE 695 09 529 beschriebenen System setzt eine Kommunikation - nach Zwischenspeicherung - zwischen einer eigens hierfür in das Stromnetz integrierten Computereinheit und der Abgriffsvorrichtung voraus. Die Abgriffsvorrichtung muss mit der Computereinheit kommunizieren. Prozess- und Freigabeentscheidungen werden über jede einzelne Abgriffseinrichtung bzw. ihr vorgeschaltete Technik getroffen. Die Abgriffseinrichtung ist gemäß der DE 695 09 529 Herr des Identifikations- und Freigabeverfahrens. Das in der DE 695 09 529 beschriebene Verteilnetzwerk kann nicht betrieben werden, ohne dass für die Kommunikation mit den Abgriffseinrichtungen stromnetzseitig zusätzliche Technik erforderlich wird (eigene Computereinheiten).

US 2006/259447 beschreibt ein System und ein Verfahren zum Erfassen und Berichten von Energieverbrauch mittels Verbrauchszähler. Das System funktioniert derart, dass ein Energieversorger ("power supplier") den einzelnen Verbrauchszählem ("consumption meter") Zählerkennungen ("meter identifier") zuweist. Außerdem wird jedem Verbrauchszähler von dem Energieversorger eine Kundenkennung zugewiesen ("owner identifier"). Damit wird ein bestimmter Verbrauchszähler einem bestimmten Kunden zugewiesen. Außerdem kann der Energieversorger über die Kundenkennung den ermittelten Verbrauch dem zugehörigen Kundenkonto zuordnen und abrechnen.

### Zusammenfassung der Erfindung

Die Erfindung ermöglicht das ortsungebundene Zählen und Messen von aus dem Stromnetz entnommener bzw. in dieses eingespeister elektrischer Energie auf einfache Weise. Beschrieben wird eine neue Lösung, bei der elektrische Energie nicht in alleiniger Abhängigkeit eines festen geographischen Netzanschlusspunkts gemessen und gezählt wird, sondern in Abhängigkeit einzelner Verbrauchs- und/oder Erzeugungseinheiten bzw. ihrer Nutzer (Systemteilnehmer), die einen solchen Netzanschlusspunkt nutzen (ortsungebundener Zähl- und Messpunkt).

Die Idee ist auch insoweit neu, als die technischen Anforderungen an die Anschlussvorrichtung (und damit auch die Kosten für jede einzelne Anschlussvorrichtung) minimiert werden. Insbesondere wird vermieden, dass für jede Anschlussvorrichtung oder für Gruppen von Anschlussvorrichtungen zusätzliche Computereinheiten und/oder zusätzliche Technik, insbesondere eine Kommunikation über dem Stromnetz überlagerte Signale erforderlich sind.

Die Erfindung beschreibt darüber hinaus zusätzliche Funktionen eines ortsungebundenen Zähl- und Messpunkts, die in den abhängigen Patentansprüchen 2 bis 6 definiert sind.

Verfahren zum ortsungebundenen Messen, Zählen und Abrechnen elektrischen Stroms sind in den Patentansprüchen 7 bis 13 beschrieben.

Die Erfindung nutzt zur Lösung des technischen Problems, der ortsungebundenen Messung und Zählung von entnommener/eingespeister elektrischer Energie, das Wissen über aktuelle Kommunikations-, Datenübertragungs- und Identifikationstechnologien. Die Erfindung löst das technische Problem durch ein Mess- und Zählpunkt-System. Dieses setzt sich zusammen aus
- einer fest mit dem Stromnetz verbundenen (ortsgebundenen) Anschlussvorrichtung und
- einer identifizierbaren ortsungebundenen, funktionalen Einheit zur Messung und Zählung der durch eine Verbrauchs- oder Erzeugungseinheit an der ortsgebundenen Anschlussvorrichtung entnommenen bzw. eingespeisten elektrischen Energie.

Zunächst wird die ortsgebundene Anschlussvorrichtung näher erläutert. Mit Hilfe der fest mit dem Stromnetz verbundenen (ortsgebunden) Anschlussvorrichtung werden Verbrauchs- und/oder Erzeugungseinheiten an das Stromnetz angeschlossen (regelmäßig konduktiv). Bei der Anschlussvorrichtung handelt es sich damit grundsätzlich um eine Steckdose, wobei die Bauart nicht erheblich ist. Möglich sind konduktive Verbindungen verschiedener Art, sei es für einphasigen oder mehrphasigen Wechselstrom. Starkstrom. Gleichstrom etc.) Die Anschlussvorrichtung benötigt erfindungsgemäß immer eine Kennung, um den Inhaber der Anschlussvorrichtung zu Abrechnungszwecken identifizieren zu können. Diese Kennung kann, muss aber nicht, einmalig sein (ggf. sind mehrere Anschlussvorrichtungen einer Person zugeordnet). In der einfachsten Form genügt es, dass die Anschlussvorrichtung als Kennung eine Nummer aufweist, die z.B. auf die Anschlussvorrichtung aufgedruckt ist und anhand derer die Anschlussvorrichtung identifiziert werden kann. Jede andere Form der Kennzeichnung (ganz gleich ob visuell, elektronisch oder sonst wie) ist ebenfalls möglich. Möglich ist auch die Kennzeichnung der Anschlussvorrichtung mittels eines Mikroprozessors.

Mit Hilfe der Kennung kann jede Anschlussvorrichtung einem Abrechnungspartner (Inhaber der Anschlussvorrichtung) eindeutig zugeordnet werden, um die Abrechnung zu ermöglichen (etwa durch Abgleich der Kennung mit den in einer Datenbank oder einer sonstigen Vorrichtung hinterlegten Informationen über den Anschlussinhaber). Die Speicherung weiterer Informationen zu der Anschlussvorrichtung ist möglich.

Weiterer Bestandteil des Zähl- und Messpunkt-Systems ist neben der Anschlussvorrichtung eine nicht fest mit dem Stromnetz verbundene (ortsungebundene) funktionale Einheit, die im Wesentlichen aus einem Stromzähler und weiteren (bekannten) Vorrichtungen zur Erfassung der Kennung der Anschlussvorrichtung, zur Speicherung der Mess- und Zähldaten sowie der genutzten Anschlussvorrichtung und einer Vorrichtung zum Auslesen der gespeicherten Daten besteht.

Gemeinsam mit der aufgrund der Kennung identifizierbaren Anschlussvorrichtung bildet diese ortsungebundene funktionale Einheit ein Zähl- und Messpunkt-System. Die ortsungebundene funktionale Einheit ist ihrerseits eindeutig identifizierbar. Dabei ist es möglich, der Einheit eine feste Identität dauerhaft zuzuweisen (zum Beispiel durch Verwendung einer nur einmal vergebenen Stromzählernummer). Neben oder anstelle einer festen Zählernummer ist darüber hinaus auch möglich, die Einheit durch deren jeweiligen Nutzer mit einer Identität zu versehen (in ähnlicher Weise, wie z. B. ein Mobiltelefon erst durch Einlegen einer SIM-Karte zu einem eindeutig identifizierbaren Systemteilnehmer wird) bzw. die feste Identität zu modifizieren.

Die ortsungebundene funktionale Einheit besteht danach mindestens aus den nachstehenden technischen Vorrichtungen, deren räumliche Anordnung und/oder technische Ausführung variieren kann:

### (1) Vorrichtung zum Erfassen der Kennung der Anschlussvorrichtung

Es bedarf einer Vorrichtung zum Erfassen der Kennung der Anschlussvorrichtung, die unterschiedlich ausgestaltet werden kann.

Möglich ist etwa die manuelle Erfassung der Kennung durch eine Bedienperson, etwa durch Ablesen der Kennung an der Anschlussvorrichtung und Verzeichnen, Eingeben etc. dieser Kennung in eine dafür geeignete Vorrichtung (z.B. Aufschreiben auf ein Blatt Papier zur späteren Verwendung, Eingabe in ein hierfür vorgesehenes Gerät).

Möglich und vorzugswürdig ist ebenso die automatisierte Erfassung der Kennung. Diese kann sowohl durch Nutzer erfolgen (indem die Person ein dafür vorgesehenes Gerät zum Einlesen und Speicher der Kennung an die Anschlussvorrichtung hält und die Kennung in das Gerät eingelesen wird) als auch automatisiert erfolgen (indem die Verbrauchseinheit die Kennung der Anschlussvorrichtung unter Nutzung entsprechender technischer Verfahren, z.B. Funk, automatisch ausliest). Vorzugsweise geschieht dies über Barcode-Kennunnen und entsprechende Lesegeräte, oder über RFID-Tags und RFID-Lesegeräte.

### (2) Identifizierbare Vorrichtung zum Zählen und Messen

Ferner ist eine Vorrichtung zum Zählen und Messen der elektrischen Energie vorgesehen, die von der Verbrauchs- und/oder Erzeugungseinheit aus der gemäß (1) erkannten Anschtussvorrichtung entnommen und/oder in die Anschlussvorrichtung eingespeist wird. Bei dieser Vorrichtung handelt es sich um einen Stromzähler (vorzugsweise einen bidirektionalen Lastgangzähter für ein- oder mehrphasigen Wechselstrom), wobei dessen Funktionalität im Einzelnen stark variieren kann und vom Einsatzumfeld des ortsungebundenen Zähl- und Messpunktes abhängig ist.

### (3) Vorrichtung zum Speichern von Daten

Erforderlich ist darüber hinaus eine Vorrichtung zum Speichern der gemäß (2) ermittelten Zähl- und Messdaten sowie der gemäß (1) ermittelten Kennung der jeweils genutzten Anschlussvorrichtung, wobei es sich beispielsweise um einen Speicherchip, eine Festplatte oder ein sonstiges Speicherelement handeln kann, in dem die Daten zur weiteren Verwendung gespeichert oder zwischengespeichert werden.

### (4) Vorrichtung zur Auslesung der gespeicherten Daten

Schließlich bedarf es einer Vorrichtung zur Auslesung der gemäß (3) gespeicherten Daten. Sowohl die Messdaten als auch die Kennung der jeweils benutzten Anschlussvorrichtung müssen aus dem Speicher auslesbar sein, um weiterverarbeitet werden zu können. Das Auslesen der Daten kann dabei technisch auf verschiedene Arten erfolgen. In der Regel wird es sich um eine Datenschnittstelle handeln, über die die Daten (je nach Art der Schnittstelle) in verschiedener Weise manuell bzw. ganz oder teilweise automatisiert ausgelesen werden können. Möglich ist etwa eine Schnittstelle zur vollautomatischen Fernauslesung, bei die Daten beispielsweise drahtlos an eine Zentralcomputereinheit übertragen werden. Ebenso ist eine Schnittstelle zur halbautomatischen Auslesung möglich (etwa in dem die Bedienperson das Speichermedium mittels einer Schnittstelle an eine Vorrichtung zur Datenübertragung anschließt und die Daten an eine Zentralcomputereinheit übermittelt). Auch eine Vorrichtung zur manuellen/visuellen Auslesung der Daten ist möglich (z.B. eine Anzeige, von der die sichtbaren Daten händisch oder anderweitig autgenommen werden und anschließend übermittelt werden können).

Die Anordnung der vorstehend erläuterten Vorrichtungen kann variiert werden. Insbesondere ist eine enge räumliche Verbindung, etwa dergestalt, dass alle Vorrichtungen an einem Ort, z.B. in einem Gerät, angeordnet werden, nicht erforderlich. Entscheidend ist, dass die vorstehend beschriebenen Vorrichtungen in der beschriebenen Art und Weise als funktionale *ortsungebundene* Einheit zusammenwirken. Die Vorrichtungen sind nicht Teil der Anschlussvorrichtung, sondern werden insgesamt oder jedenfalls teilweise außerhalb der Anschlussvorrichtung, vorzugsweise insgesamt in der Verbrauchs- und/oder Erzeugungseinheit angeordnet. Durch diese Anordnung wird gewährleistet, dass die unter (1) bis (4) beschriebenen Vorrichtungen nur einmal je mobiler Verbrauchs- und oder Erzeugungseinheit benötigt werden. Anders als bei DE 695 09 529 werden zusätzliche Computereinheiten, die mit der Anschlussvorrichtung kommunizieren oder diese steuern. und/oder eine Kommunikation über Signale, die dem Stromnetz Überlagert sind, nicht benötigt. Außer der einfachen Installation der Anschlussvorrichtung sind deshalb keine Arbeiten an der Stromnetzinfrastruktur notwendig.

Das technische Problem, die Bereitstellung eines Zähl- und Messpunkt-Systems, kann jedoch auch dadurch gelöst werden, dass die ortsungebundene funktionale Einheit insgesamt oder teilweise außerhalb der Verbrauchs- und/oder Versorgungseinheit und ganz oder überwiegend außerhalb der Anschlussvorrichtung eingerichtet wird, im Sinne eines separaten Moduls. In diesem Fall würden die technischen Vorrichtungen in ein Gerät integriert, das zwischen die Verbrauchs- und/oder Versorgungseinheit und die Anschlussvorrichtung geschaltet wird. Hierdurch wird erreicht, dass auch Verbrauchs- und/oder Versorgungseinheiten. bei denen die Vorrichtungen (1) bis (4) nicht vollständig integriert sind, die volle Funktionalität eines ortsungebundenen Zähl- und Messpunkts nutzen können.

Kern der Erfindung ist somit, dass mit dem erfindungsgemäßen ortsungebundenen Zähl- und Messpunkt die in oder bei der Anschlussvorrichtung vorhandene Technik minimiert wird und somit die in (1) bis (4) beschriebenen Vorrichtungen ebenso wenig in der Anschlussvorrichtung benötigt werden wie zusätzliche Computereinheiten zur Kommunikation mit bzw. zur Steuerung der Anschlussvorrichtungen.

Die Funktionalität des erfindungsgemäßen Zähl- und Messpunkt-Systems lässt sich um die im folgenden bevorzugten Ausgestaltungen erweitern.

Das Erfassen der Kennung der Anschlussvorrichtung durch die ortsungebundene funktionale Einheit kann vorzugsweise automatisiert werden, indem die Anschlussvorrichtung elektronisch (bspw. mittels eines Mikroprozessors) gekennzeichnet wird und die ortsungebundene funktionale Einheit diese Kennung (ihrerseits unter Verwendung eines Mikroprozessors) ausliest. Denkbar ist hier auch die Anwendung von Verschlüsselungstechnologien, dass heißt eine codierte Datenübertragung. Die erforderliche Kommunikation kann drahtlos (z. B. Bluetooth, WLAN, NFC, etc.) oder über ein Kabel erfolgen, wobei das Kabel auch in die Anschlussleitung zwischen Anschlussvorrichtung und ortsungebundene funktionale Einheit integriert sein kann. Sofern die ortsungebundene funktionale Einheit in der Verbrauchs- und/oder Erzeugungseinheit platziert ist, kann die "Datenleitung" auch Teil des Anschlusskabels der Verbrauchs- und/oder Erzeugungeinheit sein.

Die ortsungebundene funktionale Einheit kann zusätzlich vorzugsweise mit einer Vorrichtung ausgestattet werden, die es erlaubt, das Fortbestehen und die Dauer der elektrischen Verbindung mit der Anschlussvorrichtung zu messen/überprüfen und zwar in Zeitintervallen oder dauerhaft. Die ermittelte Dauer der elektrischen Verbindung kann in einer entsprechend modifizierten Speichervorrichtung gespeichert werden.

Die ortsungebundene funktionale Einheit ist ferner vorzugsweise so ausgestattet, dass sie einer Verbrauchs- und/oder Erzeugungseinheit (bzw. ihrem Nutzer) nur dann die Entnahme/Einspeisung elektrischer Energie gestattet, wenn diese berechtigter Systemteilnehmer ist. Hierfür kann die Anschlussvorrichtung mit einem Schalter versehen sein, der (aus Gründen der Betriebs-, Bedienungs- und Rechtssicherheit) einen elektrischen Stromfluss nur dann zulässt, wenn die ortsungebundene funktionale Einheit die Verbrauchs- und/oder Erzeugungseinheit bzw. ihren Nutzer als zur Entnahme/Einspeisung an der Anschlussvorrichtung berechtigt ausweist (gewissermaßen ein elektronisches Schloss).

Im Unterschied zur DE 695 09 529 erfolgt die Schaltung bzw. die ihr vorausgehende Identifizierung/Autorisierung der ortsungebundenen funktionalen Einheit in der hier beschriebenen Erfindung jedoch nicht dadurch, dass die Anschlussvorrichtung selbst oder eine mit ihr verbundene Computereinheit überprüft, ob die Verbrauchs- und/oder Erzeugungseinheit bzw. die Bedienperson zur Entnahme/Einspeisung berechtigt ist.

Gemäß dieser bevorzugten Ausführungsform liest die ortsungebundene funktionale Einheit die Kennung der Anschlussvorrichtung aus. Anschließend überprüft die ortsungebundene funktionale Einheit bzw. eine mit der Einheit kommunizierende Computereinheit, ob die Einheit zur Entnahme/Einspeisung an der Anschlussvorrichtung berechtigt ist. Ist das Ergebnis positiv, übermittelt die ortsungebundene funktionale Einheit dem elektronischen Schloss der Anschlussvorrichtung ein entsprechendes Signal (gewissermaßen einen elektronischen Schlüssel), das die Schließung des zu der Anschlussvorrichtung gehörigen Schalters bewirkt.

Die Anschtussvorrichtung kann schließlich mittels elektronischen Schlosses den Schalter auf Aufforderung der ortsungebundenen funktionalen Einheit oder, falls die elektrische Verbindung zwischen der ortsungebundenen funktionalen Einheit und der Anschlussvorrichtung getrennt wird, wieder öffnen (etwa nachdem das Signal zum Geschlossenhalten des Schalters entfällt) und Spannung und Stromfluss unterbrechen.

Die ortsungebundene funktionale Einheit kann ferner mit einer Vorrichtung zur Kommunikation und Fernauslesung kombiniert werden. Die Verarbeitung der am ortsungebundenen Zähl- und Messpunkt ermittelten und in der ortsungebundene funktionale Einheit gespeicherten Daten müssen zur weiteren Verarbeitung, insbesondere zur Abrechnung. übermittelt werden. Die Übermittlung der gespeicherten Daten (Zähl- und Messdaten sowie Kennung der Anschlussvorrichtung sowie ggf. der Verbindungsdauer ist ein zentraler Bestandteil eines jeden Mess- und Abrechnungssystems. Darüber hinaus ist auch eine Kommunikation in Richtung der ortsungebundenen funktionalen Einheit möglich. z. B. zur Autorisierung der Schaltung der Anschlussvorrichtung oder zur Übermittlung von weiteren Daten, die ggf. zur Steuerung verwendet werden können.

Die Daten werden mit Hilfe dieser Vorrichtung an eine Computereinheit übermittelt, die sie verarbeitet. Diese Datenverarbeitung bildet die Grundlage für die Abrechnung der durch die jeweiliege ortsungebundene funktionale Einheit erfassten Entnahme-/Einspeisevorgänge an einer Anschlussvorrichtuilg.

Die Übermittlung der Daten kann dabei mittels verschiedener Übertragungstechniken erfolgen. Möglich ist insbesondere eine drahtlose, automatisierte Datenfernübertragung durch eine entsprechende Kommunikationsvorrichtung (dauerhaft oder in Intervallen). Eine solche Kommunikationsvorrichtung kann etwa bestehende Mobilfunknetze (mit unterschiedlichen Datenübermittlungsprotokollen). ein Wireless Local Area Network (WLAN) oder sonstige (Mobil-) Funktechnologien nutzen. Die Daten können dabei unverschlüsselt oder - was wünschenswert ist und zur erforderlichen Datensicherheit beiträgt - verschlüsselt übertragen werden.

Möglich ist auch eine Kombination des ortsungebundener Zähl- und Messpunkts mit einer halbautomatisierten Datenübertragung, etwa indem die Bedienperson die Datenübertragung mit Hilfe der ortsungebundenen funktionalen Einheit über eine Schnittstelle (unter Nutzung drahtloser oder drahtgebundener Technologien) manuell initiiert.

Die ortsungebundene funktionale Einheit kann mit einer Datenbank kombiniert werden, in der zu einzelnen oder Gruppen von Anschlussvorrichtungen (identifizierbar durch deren Kennung) bestimmte Informationen abgelegt sind, die über die Daten, die zur Identifikation der AnschlussVorrichtung und ihres Inhabers erforderlichen sind, hinausgehen. Dies können zum Beispiel sein:
- der oder die Stromtarife, die dem Netzanschluss der Anschlussvorrichtung zugeordnet sind.
- die Leistungskennzahlen der Anschlussvorrichtung (mit welcher Leistung kann aus der Anschlussvorrichtung elektrische Energie entnommen bzw. eingespeist werden),
- etwaige individuelle Lastprofile der Anschlussvorrichtung, mit denen die Verbrauchs- und/oder Erzeugungseinheit dort elektrische Energie entnehmen/einspeisen kann.

Mittels dieser Informationen können sämtliche gewünschten Parameter der Anschlussvorrichtung erfasst und verfügbar gemacht werden. Außer der Kennung selbst muss die Anschlussvorrichtung bei der hier beschriebenen Erfindung keinerlei Informationen speichern bzw. zur Verfügung stellen, da diese sämtlich außerhalb der Anschlussvorrichtung gespeichert sind und abgefragt werden können. Hierdurch wird es möglich, die Anschlussvorrichtung technisch besonders einfach zu gestalten und bei der Kommunikation nur minimale Datenmengen (nämlich die Anschlusskennung) zu übertragen.

Die Datenbank lässt sich in einer Abwandlung der vorbeschriebenen Ausführung auch ganz oder teilweise auf dem Datenspeicher in der mit der ortsungebundenen funktionalen Einheit kombinierten Datenbank hinterlegen. Über die Kommunikationsschnittstelle der ortsungebundenen funktionalen Einheit kann die Datenbank dann laufend oder in Intervallen aktualisiert werden.

Die ortsungebundene funktionale Einheit kann zusätzlich mit einer Vorrichtung ausgestattet werden, die die Regelung des Verbrauchs oder der Erzeugung elektrischer Energie einer angeschlossenen Verbrauchs- und/oder Erzeugungseinheit ermöglicht. Hintergrund ist die Möglichkeit einer geregelten Integration von Verbrauchs- und/oder Erzeugungseinheiten in das Stromnetz. Die Vorrichtung zur Regelung ist vorzugsweise innerhalb der Verbrauchs- und/oder Erzeugungseinheit anzuordnen und wird über die Kommunikationsvorrichtung der ortsungebundenen funktionalen Einheit gesteuert. Die Vorrichtung kann so ausgestaltet sein, dass ihr von einer Zentralcomputereinheit drahtlos ein Signal zum Starten oder Beenden oder jeder sonstigen Modifikation des Entnahme-/Einspeisevorgangs an die Verbrauchs- und/oder Erzeugungseinheit übermittelt wird und der Lastgang entsprechend geregelt wird.

Im folgenden wird ein bevorzugtes Ausführungsbeispiel erläutert.

Die Erfindung kann im Bereich der Elektromohilität eingesetzt werden. Das folgende bevorzugte Ausführungsbeispiel beschreibt einen in diesem Bereich typischen Anwendungsfall. Für die folgende Darstellung wird als Verbrauchs- und Erzeugungseinheit ein Elektrofahrzeug gewählt, in das die erfindungsgemäße ortsungebundene funktionale Einheit integriert ist. Ortsungebundene funktionale Einheit und Anschlussvorrichtung bilden gemeinsam die Voraussetzungen für ein erfindungsgemäßes Zähl- und Messpunkt-System.

### Anschlusserkennung

Bei Anschluss des Elektrofahrzeugs an die Anschlussvorrichtung ist der in der erfindungsgemäßen Anschlussvorrichtung eingebaute Schalter zunächst offen. Es fließt kein Strom. Das Lesegerät in dem Elektrofahrzeug kann nach dem Herstellen der Verbindung zwischen Elektrofahrzeug und Anschlussvorrichtung die Kennung der Anschlussvorrichtung auslesen. Der Auslesevorgang kann (abhängig von der installierten Technik) drahtlos oder drahtgebunden (etwa mittels des Kabels, mit dem das Elektrofahrzeug an die Anschlussvorrichtung angeschlossen wird) erfolgen. Die ausgelesene Kennung wird im Speicher abgelegt.

### Autorisierung der ortsungebundene funktionale Einheit

Die Kennung wird sodann verwendet, um die Autorisierung des Schaltprozesses für den in der Anschlussvorrichtung eingebauten Schalter zu initiieren. Dies kann dergestalt geschehen, dass das Elektrofahrzeug mittels seines Kommunikationsmoduls die Kennung der Anschlussvorrichtung an eine Zentralcomputereinheit sendet und diese aufgrund von Daten, die zu der AnschlussVorrichtung und dem Nutzer des Elektrofahrzeugs hinterlegt sind, an das Elektrofahrzeug ein Signal sendet, das das Elektrofahrzeug bzw. seinen Nutzer als autorisiert oder nicht autorisiert zur Entnahme/Einspeisung von elektrischer Energie an dem entsprechenden Anschlusspunkt qualifiziert. Dabei kann etwa seitens der Zentralcomputereinheit berücksichtigt werden, ob der Nutzer mit Zahlungen für vorherige Entnahmen in Verzug ist und ob sein Elektrofahrzeug an der entsprechenden Anschlussvorrichtung Strom entnehmen kann/soll.

### Kommunikation von Steuerungs-/Regelngsparametern

Darüber hinaus können dem Elektrofahrzeug durch die Zentralcomputereinheit weitere Daten übermittelt werden, die den späteren Entnahmeprozess bestimmen. So kann etwa die zu der Anschlussvorrichtung hinterlegte maximale Ladeleistung, ein bestimmtes Ladeprofil oder ähnliches übermittelt werden. Dies kann in Abstimmung auf weitere Daten (beispielsweise über den Ladestand der Akkumulatoren) erfolgen, die dem Zentralcomputer zuvor über die Kommunikationeinheit übermittelt worden und mit den hinterlegten Daten über die Verbrauchs- und/oder Erzeugungseinheit abgestimmt sind.

### Schaffung der Anschlussvorrichtung

Erhält das Elektrofahrzeug das Autorisierungssignal, sendet es mittels des verwendeten elektronischen Verfahrens den elektronischen Schlüssel an das elektronische Schloss der Anschlussvorrichtung. Stimmt das Autorisierungssignal (z.B. ein bestimmter Code) mit den Anforderungen des elektronischen Schlosses überein, schließt dieses den Schalter und elektrische Energie kann (ggf. unter Berücksichtung der von der Zentralcomputereinheit für diese Anschlussvorrichtung und diesen Teilnehmer ühermittelten Restriktionen) entnommen oder eingespeist werden.

In einer Abwandlung ist es auch denkbar, sämtliche Daten zu den einzelnen Anschlussvorrichtungen, zum Schalt-/Entschlüsselungsprozess. dem Elektrofahrzeug und seinem Nutzer nicht oder nicht ausschließlich auf einer Zentralcomputereinheit, sondern einer Speichereinheit des Elektrofahrzeugs selbst zu hinterlegen. Hierdurch kann die Kommunikation mit der Zentralcomputereinheit bei der Herstellung der Verbindung zunächst entfallen. Die auf dem Speicher hinterlegten Daten werden in dieser Variante mit den auf der Zentralcomputereinheit hinterlegten Daten in regelmäßigen Abständen (automatisiert oder durch manuelle Einleitung) abgeglichen.

### Lastgangmessung/Zählung

Der in dem Elektrofahrzeug als Teil der funktionalen ortsunahhängigen Einheit eingebaute Lastgangzähter misst die entnommene/einspeiste Energie. Der Enmahme-/Einspeisevorgang wird fortgesetzt, bis dieser (i) vom Nutzer des Elektrofahrzeugs (etwa durch Ziehen des Steckers), (ii) durch die Verbrauchs- und/oder Erzeugungseinheit selbst (etwa mangels Bedarfs. z.B. bei vollein Akkumulator) oder - soweit vorhanden - (iii) durch die Regelungsvorrichtung beendet wird. Ein Eingreifen der Regelungsvorrichtung setzt eine entsprechende Aufforderung voraus, die vorzugsweise von der Zentralcomputereinheit an die ortsungebundene funktionale Einheit gesendet und von dieser an die Regelungsvorrichtung weitergegeben wird. Dies schließt eine eigenständige Regelung des Verbrauchs durch das durch das Batteriemanagementsystem des Elektrofahrzeugs nicht aus. Das Messgerät ühermittelt den gemessenen Lastgang der Speichereinrichtung - ggf. gemeinsam mit den zeitlichen Rahmendaten der Messung (Beginn/Ende) - die diesen gemeinsam mit der Information über die Kennung der Anschlussvorrichtung in einem elektronischen Speicher ablegt.

### Verbrauchsabrechnung

Das Kommunikationsmodul des Elektrofahrzeugs sendet (sofort oder zeitversetzt) die gespeicherten Daten an die Zentralcomputereinheit, welche sie in ihrer Datenbank speichert. Die Daten werden verwendet, um (unter Rückgriff auf die der in der Datenbank der Zentralcomputereinheit zu der Anschlussvorrichtung gespeicherten Daten) die einzelnen Entnahmevorgänge gegenüber den Beteiligten (Nutzer des Elektrofahrzeugs, Betreiber der Anschlussvorrichtung) abzurechnen. Hierbei können neben der Differenzierung nach einzelnen Anschlussvorrichtungen auch zeitliche oder sonst zu den Entnahmevorgängen gespeicherte Daten berücksichtigt werden.

Die erfindungsgemäße Lösung ist in vielerlei Hinsicht vorteilhaft.

Die erfindungsgemäße Lösung ermöglicht es vor allem aufgrund der verstärkten Einführung der Elektromobilität, dass
- elektrische Energie an zahlreichen Punkten (ortsgebunden) aus dem Stromnetz entnommen oder in das Stromnetz eingespeist werden kann ("Anschlussvorrichtungen"), z.B. im öffentlichen Straßenraum, in Parkhäusern etc.
   und
- die an der Anschlussvorrichtung entnommene/eingespeiste Energie einer Verbrauchs- und/oder Erzeugungseinheit bzw. deren Bedienperson (z.B. Elektrofahrzeug oder dessen Nutzer, nachstehend kurz auch als "Systemteilnehmer" bezeichnet) eindeutig zugeordnet und mit diesem und dem Inhaber der Anschlussvorrichtung abgerechnet werden kann.

Grund hierfür ist, dass Fahrzeuge, die ganz oder teilweise elektrisch angetrieben werden und in der Regel über einen Stecker an das Stromnetz angeschlossen werden können ("Elektrofahrzeuge"), umfassender nutzbar sind, je mehr Anschlussvorrichtungen zur Verfügung stehen. Die flächendeckende Verbreitung von Anschlussvomichtungen im öffentlichen Straßenraum und an anderen öffentlichen Orten, an denen Nutzer ihr Elektrofahrzeug parken (z.B. Arbeitsstelle, Einkaufszentren etc.) gewährleistet, dass die Vorteile der Elektromobilität in vollem Umfang genutzt werden können. Auf diese Weise gelingt es dem Nutzer des Fahrzeugs, möglichst große Teile seiner Fahrleistung mittels der in den Akkumulatoren des Fahrzeugs gespeicherten Energie elektrisch angetrieben zurückzulegen.

Ebenso lässt sich durch die flächendeckende Vorhaltung von Anschlussvorrichtungen in verschiedenen Parksituationen erreichen, dass die Nutzer ihre Elektrofahrzeuge möglichst häufig und lange an das Stromnetz anschließen und die Elektrofahrzeuge hierdurch für die geregelte und damit sehr wertvolle Integration in das Stromnetz in größerem Umfang zur Verfügung stehen. Je Verbrauchs- und/oder Erzeugungseinheit (z.B. Elektrofahrzeug) wird nach aktuellen Schätzungen mit einen Bedarf von ca. vier Anschlussvorrichtungen (nämlich zuhause, am Arbeitsplatz, beim Einkaufen und bei Freizeitbeschäftigungen) gerechnet. Allein die Installation von Ansehlussvorrichtungen genügt jedoch noch nicht, um eine Infrastruktur zu schaffen, die den Ansprüchen der Elektromobilität genügt. Das erfindungsgemäße System ermöglicht es jedoch
- die Verbrauchs- und/oder Erzeugungseinheit (und/oder ihren Nutzer), die elektrische Energie an einer Anschlussvorrichtung entnehmen möchte, als berechtigten Systemteilnehmer zu identifizieren,
- eine aus Sicherheitsgründen regelmäßig nicht spannungsführende (abgeschaltete) Anschlussvorrichtung nur zur Nutzung freizuschalten,
- die entnommene oder eingespeiste Energie zu messen und zu zählen,
- die Anschlussvorrichtung bei Beendigung der Einspeisung/Entnahme wieder zu sichern (kein Stromfluss möglich, Abschaltung),
- das Ergebnis der Elektrizitätsmessung/-zählung an eine Abrechnungsstelle zu übermitteln und
- die an der entsprechenden Anschlussvorrichtung entnommene/eingespeiste Energie mit den jeweiligen Inhabern von Anschlussvorrichtungen und Verbrauchs- und/oder Erzeugungseinheiten abzurechnen.

Die Abrechnung der entnommen elektrischen Energie ist teilnehmerbasiert (bezogen auf eine Verbrauchs- und/oder Erzeugungseinheit bzw. ihren Nutzer) und nicht ausschließlich bezogen auf einen festen geographischen Punkt möglich.

Um die Kosten für jede Anschtussvorrichtung so gering wie möglich zu halten, stellt die Erfindung eine möglichst einfache technische Infrastruktur für die Anschlussvorrichtungen bereit. Eine Anschlussvorrichtung ist vorzugsweise wie folgt beschaffen:
- Die Identifikations-, Kommunikations-, Abrechnungs- und Steuerungsprozesse erfolgt durch Nutzung bereits vorhandener Infrastruktur, so dass es stromnetzseitig keiner Technik über die (einfach gehaltenen und einfach installierharen) Anschlussvorrichtungen hinaus bedarf. Auf diese Weise kann sowohl auf den fest installierten Stromzähler als auch auf stromnetzseitige Kommunikation (etwa die Anschlussvorrichtungen regelnde Computereinheiten) verzichtet werden.
- Die Anzahl der für eine ortsungebundene Abrechnung erforderlichen Systemkomponenten wird dadurch begrenzt, dass die Komponenten nicht in das im System am häufigsten erforderliche Element (die Anschtussvorrichtungen), sondern außerhalb davon, vorzugsweise in den Verbrauchs- und/oder Erzeugungseinheiten angeordnet werden (Einsparung Faktor vier)
- Über die Anschmssvorrichtung zu speichernde Informationen (z.B. Inhaber. Stromtarif, genauer Standort, Leistungsspezifikationen) werden nicht auf einer entsprechenden Vorrichtung der Anschlussvorrichtung selbst oder einer eigens für jede oder eine Gruppe von Anschlussvorrichtungen installierten Computereinheit hinterlegt, sondern bevorzugt in einer zentralen Datenbank. Mit Hilfe der Datenbank können jeder Anschlussvorrichtung alle Informationen über den Anschluss zugeordnet werden. Die Anschlussvorrichtung selbst muss lediglich mit einer Kennung, über die sich der Anschlussinhaber identifizieren lässt (zum Beispiel anhand der in der Datenbank hinterlegten Informationen), ausgestattet sein.

## Patentansprüche

1. Zähl- und Messpunkt-System zur Zählung und Messung des Verbrauchs oder der Erzeugung elektrischer Energie **gekennzeichnet durch**
a. eine Anzahl von ortsgebundenen, mit dem Stromnetz verbundenen und zur Entnahme oder Einspeisung elektrischer Energie **durch** Verbrauchs- und/oder Erzeugungseinheiten geeigneten Anschlussvorrichtungen, wobei eine Anschlussvorrichtung aus einer Steckdose besteht, die mit einer Kennung versehen sind, mittels derer eine Identifizierung des Anschlussinhabers möglich ist,
und
b. mindestens eine identifizierbare ortsungebundene funktionale Einheit zur Messung und Zählung der elektrischen Energie, die **durch** Verbrauchs- und/oder Erzeugungseinheiten an einer oder mehreren ortsgebundenen Steckdosen über einen elektrischen Leiter entnommen bzw. eingespeist wird, wobei die funktionale Einheit aufweist:
aa. eine Vorrichtung zum Erfassen der Kennung der Steckdose,
bb. eine identifizierbare Vorrichtung zum Zählen und Messen der aus der gemäß (aa.) erfassten Steckdose entnommenen und/oder in die Steckdose eingespeisten elektrischen Energie,
cc. eine Vorrichtung zum Speichern der gemäß (bb.) ermittelten Zähl- und Messdaten sowie der gemäß (aa.) erfassten Kennung der jeweils genutzten Steckdose, und
dd. eine Vorrichtung zum Auslesen der gemäß (cc.) gespeicherten Daten;
wobei in dem Zähl- und Messpunkt-System die Steckdose keine Vorrichtung zur Zählung des Verbrauchs oder der Erzeugung elektrischer Energie aufweist, wobei die ortsungebundene funktionale Einheit zusätzlich mit einer auf einer Zentralcomputereinheit oder anderweitig außerhalb einer Steckdose gespeicherten Datenbank kombiniert ist, in der Zusatzdaten über die Steckdose(en) hinterlegt sind, wobei in der Datenbank Informationen zur Identifizierung des Anschlussinhabers abgelegt sind.

2. Zähl- und Messpunkt-System nach Anspruch 1, wobei
die Steckdose mit einer elektronischen Kennung und die ortsungebundene funktionale Einheit mit einer Vorrichtung zum elektronischen Erfassen der elektronischen Kennung ausgestattet sind, und die Kommunikation zwischen der Steckdose und der ortsungebundenen, funktionalen Einheit direkt, vorzugsweise drahtlos oder über ein Kabel erfolgt.

3. Zähl- und Messpunkt-System nach Anspruch 1 oder 2, wobei die ortsungebundene funktionale Einheit mit einer weiteren Vorrichtung zur Messung/Überprüfung, vorzugsweise in Zeitintervallen oder dauerhaft, des Fortbestehens der elektrischen Verbindung mit der Steckdose ausgestattet ist, und die Speichervorrichtung zusätzlich die ermittelte Dauer der mittels eines elektrischen Leiters hergestellten elektrischen Verbindung zwischen ortsgebundener, funktionaler Einheit und Steckdose speichert.

4. Zähl- und Messpunkt-System nach Anspruch 1, 2 oder 3, wobei die Steckdose mit einem elektronischen Schloss und einem mittels elektronischem Schloss schließbaren Schalter ausgestattet ist, und die ortsungebundene funktionale Einheit ein elektronisches Verfahren verwendet, das einen elektronischen Schlüssel bereitstellt, um den über das elektronische Schloss gesicherten Schalter zu schließen, und die Steckdose mittels elektronischen Schlosses den Schalter auf Aufforderung der ortsungebundenen, funktionalen Einheit wieder öffnet oder, falls die elektrische Verbindung zwischen der ortsungebundenen, funktionalen Einheit und der Steckdose getrennt wird, selbsttätig wieder öffnet.

5. Zähl- und Messpunkt-System nach einem der Ansprüche 1 bis 4, wobei die ortsungebundene funktionale Einheit mit einer Vorrichtung zur Kommunikation und Fernauslesung der gespeicherten Daten ausgestattet ist.

6. Zähl- und Messpunkt-System nach einem der Ansprüche 1 bis 5, wobei die ortsungebundene funktionale Einheit zusätzlich mit einer Vorrichtung zur Regelung des Verbrauchs oder der Erzeugung der Verbrauchs- und/oder Erzeugungseinheit kombiniert ist.

7. Verfahren zum ortsungebundenen Messen und Zählen sowie Abrechnen der von einer Verbrauchs- und/oder Erzeugungseinheit entnommenen bzw. eingespeisten elektrischen Energie mittels mindestens einem Zähl- und Messpunkt-System nach einem der Ansprüche 1 bis 6, mit den Schritten:
a. Anschließen der identifizierbaren ortsungebundenen, funktionalen Einheit für eine nachgeschaltete Verbrauchs- und/oder Erzeugungseinheit an eine Anschlussvorrichtung, wobei eine Anschlussvorrichtung aus einer Steckdose besteht;
b. Erfassen der Kennung der Steckdose;
c. Zählen und Messen der aus der erfassten Steckdose entnommenen und/oder in die Steckdose eingespeisten elektrischen Energie wobei in dem Zähl- und Messpunkt-System die Steckdose keine Vorrichtung zur Zählung des Verbrauchs oder der Erzeuzung elektrischer Energie aufweist;
d. Speichern der ermittelten Zähl- und Messdaten sowie der erfassten Kennung der jeweils genutzten Steckdose;
e. Auslesen der gespeicherten Daten; und
f. Verarbeitung der ausgelesenen Daten unter Verwendung der für die Steckdose(en) sowie die identifizierbaren ortsungebundenen, funktionalen Einheit hinterlegten weiteren Daten.

8. Verfahren nach Anspruch 7, ferner mit den Schritten Erfassen der Dauer der mittels eines elektrischen Leiters hergestellten elektrischen Verbindung zwischen ortsungebundener, funktionaler Einheit und Steckdose und Speichern der Dauer der mittels eines elektrischen Leiters hergestellten elektrischen Verbindung zwischen ortsungebundener, funktionaler Einheit und Steckdose.

9. Verfahren nach Anspruch 7 oder 8, ferner mit dem Schritt Bereitstellung eines elektronischen Schlüssels und Schließen des über das elektronische Schloss gesicherten Schalters der Steckdose und mit dem Schritt Öffnung des Schalters der Steckdose.

10. Verfahren nach Anspruch 7, 8 oder 9, ferner mit dem Schritt Abrechnen der entnommenen und/oder eingespeisten elektrischen Energie.

11. Verfahren nach einem der Ansprüche 7 bis 10, wobei die Vorrichtung zur Kommunikation und Fernauslesung gemäß Anspruch 5 für die folgenden weiteren Schritte genutzt wird:
a. Femauslesen der erfassten, gespeicherten Kennung der Steckdose;
b. Initiierung des Autorisierungsprozesses durch die ortsungebundene funktionale Einheit für das Schließen des elektronischen Schlosses der Steckdose gemäß Anspruch 4 und Übermittlung der Autorisierungsdaten an die ortsungebundene funktionale Einheit mit Hilfe der Vorrichtung zur Kommunikation, mit der Möglichkeit, weitere Daten an die ortsungebundene funktionale Einheit zu übertragen.
c. Auslesen der gespeicherten Daten im Wege der Fernauslesung mit Hilfe der Vorrichtung zur Kommunikation.

12. Verfahren nach einem der Ansprüche 7 bis 11, wobei ferner der Verbrauch oder die Erzeugung der Verbrauchs- und/oder Erzeugungseinheit geregelt wird.

13. Verfahren nach Anspruch 12, wobei die Regelung mit Hilfe der Vorrichtung zur Kommunikation und Fernauslesung erfolgt.

## Claims

1. A metering and measuring point system for metering and measuring electrical energy consumption or generation, **characterized by**
a. a number of stationary connection devices that are connected to the power grid and suitable for drawing off or feeding in electrical energy by means of consumption and/or generation units and that are tagged with an identifier enabling the identification of a grid connection holder, wherein a connection device consists of a socket; and
b. at least one identifiable mobile or non-stationary functional unit for measuring and metering electrical energy that is drawn off or fed in one or more stationary sockets by consumption and/or generation units via an electric conductor, said functional unit comprising:
aa. a device for detecting the identifier of the socket;
bb. an identifiable device for metering and measuring the electrical energy drawn off and/or fed in the socket detected according to (aa);
cc. a device for storing the metering and measuring data detected according to (bb) as well as the identifier of the respective socket in use as detected according to (aa); and
dd. a device for reading out the data stored according to (cc);
wherein in the metering and measuring point system the socket comprises no device for metering electrical energy consumption or generation, wherein the mobile or non-stationary functional unit is additionally combined with a database which is stored on a central computer unit or otherwise outside a socket and in which additional data regarding the socket(s) are stored, wherein the database stores information for identifying the grid connection holder.

2. The metering and measuring point system according to claim 1, wherein
the socket is provided with an electronic identifier and the mobile or non-stationary functional unit is provided with a device for the electronic detection of the electronic identifier and communication between the socket and the mobile or non-stationary functional unit is direct, preferably wireless or by cable.

3. The metering and measuring point system according to claim 1 or 2, wherein the mobile or non-stationary functional unit is provided with a further device for measuring/testing, preferably periodically or permanently, whether there is still an electrical connection with the socket and the storing device additionally stores the detected duration of the electrical connection provided by an electric conductor between the stationary functional unit and the socket.

4. The metering and measuring point system according to claim 1, 2 or 3, wherein the socket is provided with an electronic lock and a switch that is lockable by means of said electronic lock and the mobile or non-stationary functional unit uses an electronic method providing an electronic key to close the switch secured by the electronic lock and the socket reopens the switch upon request by the mobile or non-stationary functional unit by means of the electronic lock or automatically if the electrical connection between the mobile or non-stationary functional unit and the socket is separated.

5. The metering and measuring point system according to any of claims 1 to 4, wherein the mobile or non-stationary functional unit is provided with a device for communication and remote readout of the stored data.

6. The metering and measuring point system according to any of claims 1 to 5, wherein the mobile or non-stationary functional unit is additionally combined with a device for controlling consumption or generation of electrical energy of the connected consumption and/or generation unit.

7. A method of measuring and metering as well as billing/clearing of the electrical energy drawn off and/or fed in by a consumption and/or generation unit regardless of the location, using at least one metering and measuring point system according to any of claims 1 to 6, comprising the steps of:
a. connecting the identifiable mobile or non-stationary functional unit for a downstream consumption and/or generation unit to a connection device, wherein a connection device consists of a socket;
b. detecting the identifier of the socket;
c. metering and measuring the electrical energy drawn off the detected socket and/or fed in the connection device, wherein in the metering and measuring point system the socket comprises no device for metering electrical energy consumption or generation;
d. storing the detected metering and measuring data as well as the detected identifier of the respective socket in use;
e. reading out the stored data; and
f. processing the read-out data using the further data stored for the socket (s) as well as the identifiable mobile or non-stationary functional unit.

8. The method according to claim 7, further comprising the steps of detecting the duration of the electrical connection achieved via an electric conductor between the mobile/non-stationary functional unit and the socket and storing the duration of the electrical connection achieved via an electric conductor between the mobile/non-stationary functional unit and the socket.

9. The method according to claim 7 or 8, moreover comprising the step of providing an electronic key and closing the switch of the socket that is secured by the electronic lock and the step of opening the switch of the socket.

10. The method according to claim 7, 8 or 9, further comprising the step of billing/clearing of the drawn off and/or fed in electrical energy.

11. The method according to any of claims 7 to 10, wherein the device for communication and remote readout according to claim 5 is used for the following further steps:
a. remote readout of the detected, stored identifier of the socket;
b. initiation of the authorization process by the mobile or non-stationary functional unit for closing the electronic key of the socket according to claim 4 and communication of the authorization data to the mobile or non-stationary functional unit by means of the communication device, and optionally communication of further data to the mobile or non-stationary functional unit;
c. readout of the stored data by remote readout by means of the communication device.

12. The method according to any of claims 7 to 11, wherein further the consumption or generation of electrical energy of the connected consumption and/or generation unit is controlled.

13. The method according to claim 12, wherein control is achieved by means of the communication and remote readout device.

## Revendications

1. Système de comptage et de points de mesure pour le comptage et la mesure de la consommation ou de la génération d'énergie électrique, **caractérisé par**
a. une pluralité de dispositifs de connexion fixe, reliés au réseau de courant et appropriés au prélèvement ou à la distribution d'énergie électrique par l'intermédiaire d'unités de consommation et/ou de génération, un dispositif. de connexion consistant en une prise de courant, lesquels sont pourvus d'un identifiant permettant une identification du propriétaire de la connexion, et
b. au moins une unité fonctionnelle portable identifiable, pour la mesure et le comptage de l'énergie électrique prélevée ou distribuée par l'intermédiaire d'unités de consommation et/ou de génération sur un ou plusieurs dispositifs de connexion au moyen d'un conducteur électrique, ladite unité fonctionnelle comprenant :
aa. un dispositif de saisie de l'identifiant de la prise de courant,
bb. un dispositif identifiable pour le comptage et la mesure de l'énergie électrique prélevée de la prise de courant saisie conformément à (aa.) et/ou alimentant la prise de courant,
cc. un dispositif pour la mémorisation des données de comptage et de mesure déterminées conformément à (bb.) et de l'identifiant, saisi conformément à (aa.), de chaque prise de courant utilisée, et dd. un dispositif pour la lecture des données mémorisées conformément à (cc.) ;
dans lequel, dans le système de comptage et de points de mesure, la prise de courant ne contient pas de dispositif pour compter la consommation ou la génération d'énergie électrique, dans lequel l'unité fonctionnelle portable est en outre combinée à une base de données stockée sur une unité centrale d'ordinateur ou ailleurs extérieurement à une prise de courant, dans laquelle sont archivées des données auxiliaires sur la ou les prises de courant, dans laquelle la base de données contient des information pour identifier le propriétaire de la connexion.

2. Système de comptage et de points de mesure selon la revendication 1, où
la prise de courant est pourvue d'un identifiant électronique et l'unité fonctionnelle portable d'un dispositif pour la saisie électronique de l'identifiant électronique, et où la communication entre la prise de courant et l'unité fonctionnelle portable s'effectue directement, de préférence sans fil ou par l'intermédiaire d'un câble.

3. Système de comptage et de points de mesure selon la revendication 1 ou 2, où l'unité fonctionnelle portable est pourvue d'un autre dispositif pour la mesure/le contrôle, de préférence à intervalles temporels ou en continu, du maintien de la liaison électrique avec la prise de courant, et où le dispositif de mémorisation mémorise en outre la durée déterminée pour la liaison électrique établie au moyen d'un conducteur électrique entre l'unité fonctionnelle fixe et la prise de courant.

4. Système de comptage et de points de mesure selon la revendication 1, 2 ou 3, où la prise de courant est pourvue d'un verrou électronique et d'un interrupteur condamnable par verrou électronique, où l'unité fonctionnelle portable recourt à un procédé électronique qui délivre un code électronique pour verrouiller de manière fiable l'interrupteur condamné par le verrou électronique, et où la prise de courant rouvre l'interrupteur à la demande de l'unité fonctionnelle portable au moyen du verrou électronique, ou rouvre celui-ci automatiquement si la liaison électrique entre l'unité fonctionnelle portable et la prise de courant est interrompue.

5. Système de comptage et de points de mesure selon l'une des revendications 1 à 4, où l'unité fonctionnelle portable est pourvue d'un dispositif pour la communication et la lecture à distance des données mémorisées.

6. Système de comptage et de points de mesure selon l'une des revendications 1 à 5, où l'unité fonctionnelle portable est en outre combinée à un dispositif pour la régulation de la consommation ou de la génération de l'unité de consommation et/ou de génération.

7. Procédé pour la mesure et le comptage sur un poste portable ainsi que pour la facturation d'une énergie électrique prélevée ou distribuée par l'intermédiaire d'une unité de consommation et/ou de génération, au moyen d'au moins un système de comptage et de points de mesure selon l'une des revendications 1 à 6, comprenant les étapes suivantes :
a. raccordement de l'unité fonctionnelle portable identifiable pour une unité de consommation et/ou de génération située en aval sur un dispositif de connexion, un dispositif de connexion consistant en une prise de courant ;
b. saisie de l'identifiant de la prise de courant ;
c. comptage et mesure de l'énergie électrique prélevée de la prise de courant saisie et/ou alimentant la prise de courant, dans lequel, dans le système de comptage et de points de mesure, la prise de courant ne contient pas de dispositif pour compter la consommation ou la génération d'énergie électrique,
d. mémorisation des données de comptage et de mesure déterminées et de l'identifiant saisi de chaque prise de courant utilisée ;
e. lecture des données mémorisées ; et
f. traitement des données lues par exploitation des autres données archivées pour la ou les prises de courant et pour les unités fonctionnelles portables identifiables.

8. Procédé selon la revendication 7, comprenant en outre les étapes de saisie de la durée de la liaison électrique établie au moyen d'un conducteur électrique entre l'unité fonctionnelle portable et la prise de courant, et de mémorisation de la durée de la liaison électrique établie au moyen d'un conducteur électrique entre l'unité fonctionnelle portable et la prise de courant.

9. Procédé selon la revendication 7 ou 8, comprenant en outre l'étape de délivrance d'un code électronique et de verrouillage de l'interrupteur de la prise de courant condamné par le verrou électronique, et l'étape d'ouverture de l'interrupteur de la prise de courant.

10. Procédé selon la revendication 7, 8 ou 9, comprenant en outre l'étape de facturation de l'énergie électrique prélevée et/ou distribuée.

11. Procédé selon l'une des revendications 7 à 10, où le dispositif de communication et de lecture à distance selon la revendication 5 est utilisé pour les autres étapes suivantes :
a. lecture à distance de l'identifiant de la prise de courant saisi et mémorisé ;
b. initialisation du processus d'autorisation par l'unité fonctionnelle portable pour la fermeture du verrou électronique de la prise de courant selon la revendication 4, et transmission des données d'autorisation à l'unité fonctionnelle portable au moyen du dispositif de communication, avec possibilité de transmission d'autres données à l'unité fonctionnelle portable ;
c. lecture des données mémorisées au moyen de la lecture à distance à l'aide du dispositif de communication.

12. Procédé selon l'une des revendications 7 à 11, où en outre la consommation ou la génération de l'unité de consommation et/ou de génération sont régulées.

13. Procédé selon la revendication 12, où la régulation est effectuée au moyen du dispositif de communication et de lecture à distance.
